# EUROPEAN PATENT APPLICATION

(11) **EP 4 393 358 A1**
(43) Date of publication of application: **03.07.2024**
(21) Application number: 23213053.4
(22) Date of filing: 29.11.2023
(51) Int. Cl.: A47J 31/56, A47J 31/18, A47J 31/52

(54) **A COFFEE MAKER AND THE CONTROL METHOD THEREOF**

(30) Priority: 29.12.2022 TR 202221258
(71) Applicant: Arçelik Anonim Sirketi, 34445 Istanbul (TR)
(72) Inventor: BEDIR, Ersin, 34445 Istanbul (TR); INNICE, Furkan, 34445 Istanbul (TR); KARAPINAR, Ugur, 34445 Istanbul (TR); KURTOGLU, Yucel, 34445 Istanbul (TR); BOZLAK, Elif, 34445 Istanbul (TR)

(57) **Abstract**

The present invention relates to a coffee maker (1) comprising at least one brewing pot (3) wherein water, coffee and similar materials are put and which is placed into the brewing chamber (2); at least one heater (7) which is disposed on the base of the brewing chamber (2) and which heats the brewing pot (3); a control unit which enables the heater (7) to be turned on and off; at least one distance sensor (4) which is disposed on the ceiling of the brewing chamber (2) and which measures the height of the mixture in the brewing pot (3); and at least one temperature sensor (5) which is disposed on the ceiling of the brewing chamber (2) and which measures the temperature of the steam rising from the mixture in the brewing pot (3).

## Description

The present invention relates to a coffee maker which is especially used for brewing Turkish coffee and wherein the brewing pot is placed into a brewing chamber.

In the traditional brewing method of Turkish coffee, the mixture of coffee and water is brewed in the coffee pot until boiling temperature and the brewing process is ended when the rising foam reaches an ideal height. In coffee makers used especially for the preparation of Turkish coffee, the level of the coffee and water mixture is measured with an optical distance sensor with infrared wavelength. The distance sensor is positioned above the brewing pot. The distance between said point and the upper surface of the mixture in the brewing pot is measured. The brewing process is terminated according to the level change information from the distance sensor during rising. In this method, since the distance measuring sensor is placed above the brewing pot, effects such as the steam generated due to the heating of the coffee and water mixture during the brewing process and the condensation of this steam on the sensor protective glass, overheating and contamination of the sensor area cause the sensor to not measure correctly and adversely affect the quality of the coffee prepared. Moreover, with the infrared distance sensor used in existing Turkish coffee makers, it is not possible for different beverage mixtures such as milk, coffee with milk, and instant coffee to reach the desired temperature and the end of the brewing cannot be detected.

In the state of the art International Patent Application No. WO2019038172, the temperature of the upper surface of the mixture is measured without any contact by means of an infrared temperature sensor for a coffee maker. When the mixture temperature reaches the predetermined temperature value, the heater is turned off.

In the state of the art International Patent Application No. WO2011002421, the temperature of the mixture in the brewing pot is measured with direct contact by means of an NTC sensor for coffee maker. The temperature of the coffee is monitored, and upon reaching 90 degrees, the brewing process is terminated. In this document, components such as connectors, cables, etc. are needed on the brewing pot. This makes the production and usability of the brewing pot difficult and creates negative effects such as contamination of the sensor and inability to clean the same easily.

The aim of the present invention is the realization of a coffee maker wherein the brewing pot is placed into a brewing chamber.

The coffee maker realized in order to attain the aim of the present invention, explicated in the first claim and the respective claims thereof, comprises at least one brewing pot wherein water, coffee and similar materials are put and which is placed into the brewing chamber; at least one heater which is disposed on the base of the brewing chamber and which heats the brewing pot; a control unit which enables the heater to be turned on and off; at least one distance sensor which is disposed on the ceiling of the brewing chamber and which measures the height of the mixture in the brewing pot; and at least one temperature sensor which is disposed on the ceiling of the brewing chamber and which measures the temperature of the steam rising from the mixture in the brewing pot. Depending on both the level of the mixture in the brewing pot and the temperature of the steam rising from the mixture in the brewing pot, the coffee is enabled to be brewed so as to be consistently delicious and to have the appropriate foam performance.

In an embodiment of the present invention, the NTC sensor is used as the temperature sensor. The temperature sensor measures the temperature of the steam rising from the mixture. Thus, whether the coffee is brewed or not can be determined more easily and more accurately regardless of the ingredients of the mixture.

In another embodiment of the present invention, the distance sensor is an infrared (IR) sensor. The distance sensor measures the height so as to determine whether the foam is formed or not.

By means of the present invention, the temperature sensor and the distance sensor are used together, and the temperature sensor is used to measure the temperature of the steam rising from the mixture, not the temperature of the mixture such that whether the coffee is brewed or not and whether the foam is formed or not can be determined together with the distance sensor. Moreover, when a tall brewing pot is used and coffee is desired to be brewed for one person or two persons, instead of using only the distance sensor to determine whether the coffee is brewed or not, the temperature data of the steam rising from the mixture in the brewing pot received from the temperature sensor is added to the height data measured by the distance sensor such that the coffee with less mixture in the tall brewing pot is brewed so as to have a consistent, delicious taste and the desired foam level.

In the embodiment of the present invention, the coffee maker comprises a sensor holder which is provided on the ceiling of the brewing chamber, on the surface facing the inside of the brewing pot and which has a slot in the form of an inverted "V" and a base whereon the temperature sensor is fixed. By means of the slot, the steam is collected in a single area so as to reach the temperature sensor at the base. The sensor holder is positioned close to the rear wall of the brewing chamber. Thus, the temperature sensor is placed in an area which cannot be easily contacted by the user, and is also prevented from being by external factors such as open areas, windowsills, balconies, wind, etc. Consequently, the temperature sensor is enabled to perform a more stable and accurate measurement.

By means of the present invention, when coffee is desired to be brewed for one person and when the height of the mixture in the brewing pot is low and the distance from the mixture in the brewing pot to the distance sensor is high, both the distance sensor and the temperature sensor are used such that the coffee with the desired foam and taste is brewed.

The coffee maker comprises a control unit which operates according to a control method which is determined by a function based on the temperature of the steam rising from the mixture in the brewing pot and the level of the mixture in the brewing pot. According to said control method, the temperature of the steam rising from the brewing pot is measured without any contact by means of the temperature sensor provided on the ceiling of the brewing chamber. The temperature of the brewed mixture is calculated as the solution of a function based on the temperature of the steam rising from the mixture in the brewing pot and the height of the mixture in the brewing pot. By calculating the temperature of the mixture in the brewing pot from the temperature of the steam rising from the mixture in the brewing pot and the height of the mixture in the brewing pot and by reaching the temperature of the mixture in the brewing pot predetermined by the manufacturer, it is detected that the mixture in the brewing pot is brewed and rose. Thus, by using the correlation between the temperature of the steam rising from the mixture in the brewing pot and the level of the mixture in the brewing pot, the temperature of the mixture is calculated and the heater is controlled accordingly.

In the coffee maker of the present invention, the user puts water and coffee - for example Turkish coffee - into the brewing pot, and places the brewing pot into the brewing chamber. When the brewing process is started, the heater under the brewing chamber starts to operate and heats the brewing pot and/or the mixture in the brewing pot. The temperature of the steam rising from the mixture heated in the brewing pot is constantly measured by the temperature sensor provided on the sensor holder on the ceiling of the brewing chamber, and the level of the mixture in the brewing pot is constantly measured by the distance sensor, which are both controlled by the control unit. When the temperature of the steam rising from the mixture in the brewing pot and the level of the mixture reach the values predetermined by the manufacturer, the control unit decides that the mixture in the brewing pot is brewed and rose, and stops the operation of the heater. Thus, the coffee is prepared based on the measurement of the temperature of the steam rising from the mixture in the brewing pot.

By means of the present invention, the coffee is enabled to be brewed with the desired quality regardless of the height of the brewing pot and the level of the mixture therein. Thus, the distance of the mixture to the temperature sensor and to the distance sensor is prevented from adversely affecting the detection. Moreover, by preventing adverse effects from light sources emitting infrared light, such as sunlight, and reaching the coffee maker, the coffee is enabled to be brewed so as to have a consistent and delicious taste and an appropriate foam performance.

In an embodiment of the present invention, it is decided whether the coffee is brewed and the foam has reached the desired level by looking at the difference in the values measured by the temperature and distance sensors for a period of time determined by the manufacturer.

By means of the present invention, the taste and the foam performance of the coffee are improved. By using both the temperature and distance sensors, the coffee is enabled to have an improved brewing and foam quality and is prevented from overflowing from the brewing pot. Moreover, by means of the location thereof, the temperature sensor is prevented from being affected by the external environment, thus providing more accurate and stable detection. In addition, since by means of the sensor holder on the ceiling of the brewing chamber, the temperature sensor does not directly contact the liquid, cleaning problems such as bacteria accumulation on the temperature sensor are eliminated. Since both the temperature and distance sensors are provided on the ceiling of the brewing chamber, incorrect reading of analog information is prevented.

A coffee maker realized in order to attain the aim of the present invention is illustrated in the attached figures, where:
Figure 1 - is the perspective view of a coffee maker.
Figure 2 - is the top perspective view of the coffee maker.
Figure 3 - is the sideways cross-sectional view of the coffee maker.

The elements illustrated in the figures are numbered as follows.
- 1.: Coffee maker
- 2.: Brewing chamber
- 3.: Brewing pot
- 4.: Distance sensor
- 5.: Temperature sensor
- 6.: Sensor holder
- 7.: Heater
- 8.: Slot
- 9.: Base

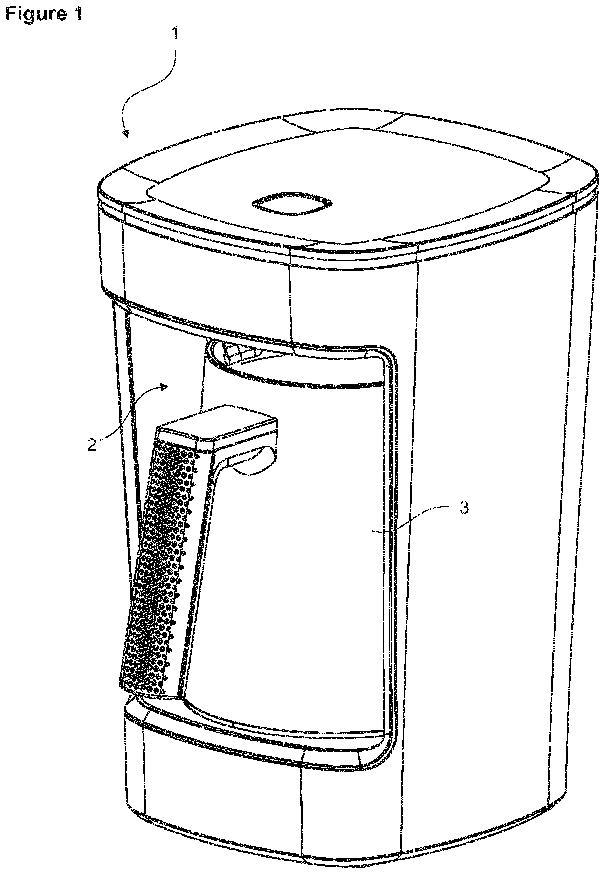

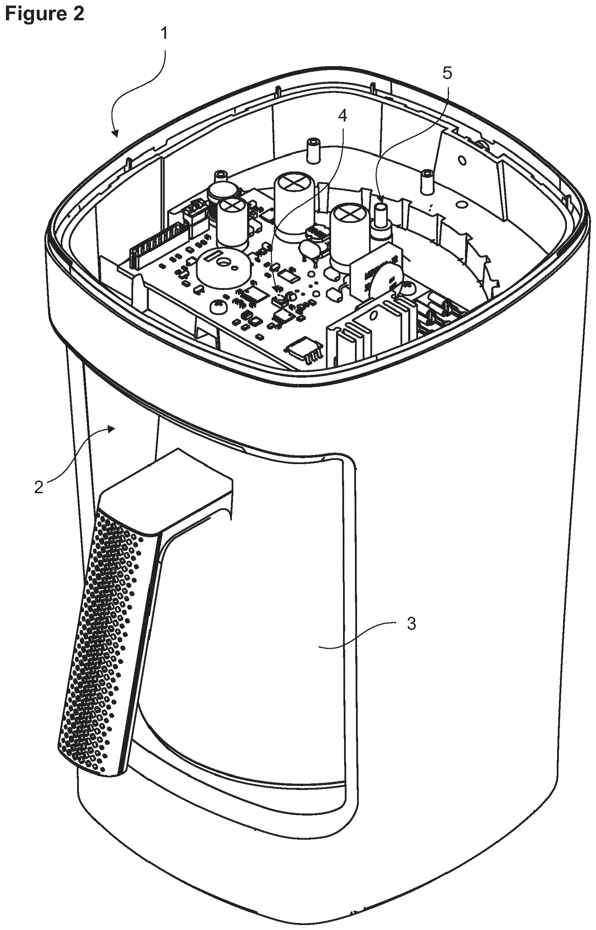

The coffee maker (1) comprises at least one brewing pot (3) wherein water, coffee and similar materials are put and which is placed into the brewing chamber (2); at least one heater (7) which is disposed on the base of the brewing chamber (2) and which heats the brewing pot (3); a control unit which enables the heater (7) to be turned on and off; at least one distance sensor (4) which is disposed on the ceiling of the brewing chamber (2) and which measures the height of the mixture in the brewing pot (3); and at least one temperature sensor (5) which is disposed on the ceiling of the brewing chamber (2) and which measures the temperature of the steam rising from the mixture in the brewing pot (3). Depending on both the level of the mixture in the brewing pot (3) and the temperature of the steam rising from the mixture in the brewing pot (3), the coffee is enabled to be brewed so as to be consistently delicious and to have the appropriate foam performance (Figure 1 and Figure 2).

In an embodiment of the present invention, the NTC sensor is used as the temperature sensor (5). The temperature sensor (5) measures the temperature of the steam rising from the mixture. Thus, whether the coffee is brewed or not can be determined more easily and more accurately regardless of the ingredients of the mixture.

In another embodiment of the present invention, the distance sensor (4) is an infrared (IR) sensor. The distance sensor (4) measures the height so as to determine whether the foam is formed or not.

By means of the present invention, the temperature sensor (5) and the distance sensor (4) are used together, and the temperature sensor (5) is used to measure the temperature of the steam rising from the mixture, not the temperature of the mixture such that whether the coffee is brewed or not and whether the foam is formed or not can be determined together with the distance sensor (4). Moreover, when a tall brewing pot (3) is used and coffee is desired to be brewed for one person or two persons, instead of using only the distance sensor (4) to determine whether the coffee is brewed or not, the temperature data of the steam rising from the mixture in the brewing pot (3) received from the temperature sensor (5) is added to the height data measured by the distance sensor (4) such that the coffee with less mixture in the tall brewing pot (3) is brewed so as to have a consistent, delicious taste and the desired foam level.

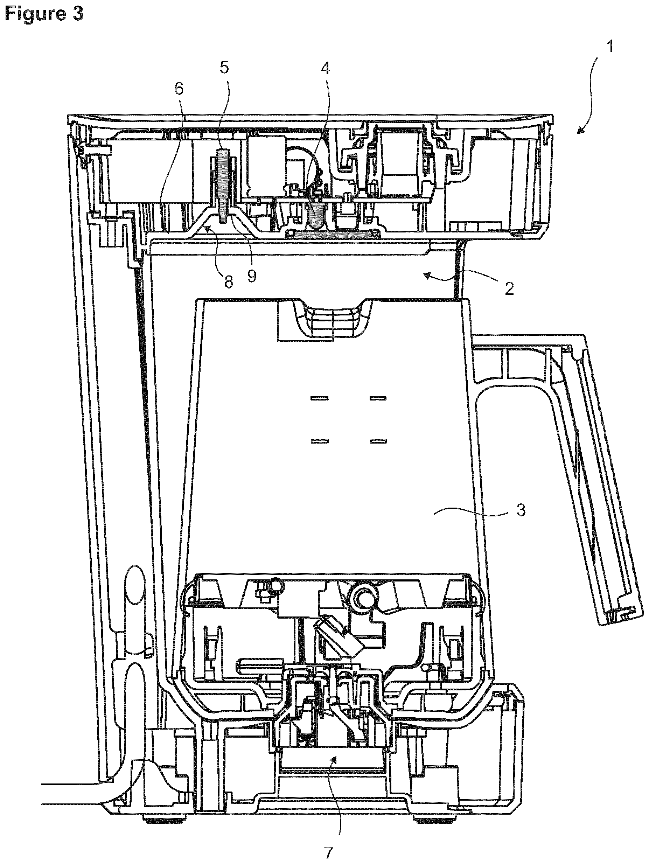

In the embodiment of the present invention, the coffee maker (1) comprises a sensor holder (6) which is provided on the ceiling of the brewing chamber (2), on the surface facing the inside of the brewing pot (3) and which has a slot (8) in the form of an inverted "V" and a base (9) whereon the temperature sensor (5) is fixed. By means of the slot (8), the steam is collected in a single area so as to reach the temperature sensor (5) at the base (9). The sensor holder (6) is positioned close to the rear wall of the brewing chamber (2). Thus, the temperature sensor (5) is placed in an area which cannot be easily contacted by the user, and is also prevented from being by external factors such as open areas, windowsills, balconies, wind, etc. Consequently, the temperature sensor (5) is enabled to perform a more stable and accurate measurement (Figure 3).

By means of the present invention, when coffee is desired to be brewed for one person and when the height of the mixture in the brewing pot (3) is low and the distance from the mixture in the brewing pot (3) to the distance sensor (4) is high, both the distance sensor (4) and the temperature sensor (5) are used such that the coffee with the desired foam and taste is brewed.

The coffee maker (1) comprises a control unit which operates according to a control method which is determined by a function based on the temperature of the steam rising from the mixture in the brewing pot (3) and the level of the mixture in the brewing pot (3). According to said control method, the temperature of the steam rising from the brewing pot (3) is measured without any contact by means of the temperature sensor (5) provided on the ceiling of the brewing chamber (2). The temperature of the brewed mixture is calculated as the solution of a function based on the temperature of the steam rising from the mixture in the brewing pot (3) and the height of the mixture in the brewing pot (3). By calculating the temperature of the mixture in the brewing pot (3) from the temperature of the steam rising from the mixture in the brewing pot (3) and the height of the mixture in the brewing pot (3) and by reaching the temperature of the mixture in the brewing pot (3) predetermined by the manufacturer, it is detected that the mixture in the brewing pot (3) is brewed and rose. Thus, by using the correlation between the temperature of the steam rising from the mixture in the brewing pot (3) and the level of the mixture in the brewing pot (3), the temperature of the mixture is calculated and the heater (7) is controlled accordingly.

In the coffee maker (1) of the present invention, the user puts water and coffee - for example Turkish coffee - into the brewing pot (3), and places the brewing pot (3) into the brewing chamber (2). When the brewing process is started, the heater (7) under the brewing chamber (2) starts to operate and heats the brewing pot (3) and/or the mixture in the brewing pot (3). The temperature of the steam rising from the mixture heated in the brewing pot (3) is constantly measured by the temperature sensor (5) provided on the sensor holder (6) on the ceiling of the brewing chamber (2), and the level of the mixture in the brewing pot (3) is constantly measured by the distance sensor (4), which are both controlled by the control unit. When the temperature of the steam rising from the mixture in the brewing pot (3) and the level of the mixture reach the values predetermined by the manufacturer, the control unit decides that the mixture in the brewing pot (3) is brewed and rose, and stops the operation of the heater (7). Thus, the coffee is prepared based on the measurement of the temperature of the steam rising from the mixture in the brewing pot (3).

By means of the present invention, the coffee is enabled to be brewed with the desired quality regardless of the height of the brewing pot (3) and the level of the mixture therein. Thus, the distance of the mixture to the temperature sensor (5) and to the distance sensor (4) is prevented from adversely affecting the detection. Moreover, by preventing adverse effects from light sources emitting infrared light, such as sunlight, and reaching the coffee maker (1), the coffee is enabled to be brewed so as to have a consistent and delicious taste and an appropriate foam performance.

In an embodiment of the present invention, it is decided whether the coffee is brewed and the foam has reached the desired level by looking at the difference in the values measured by the distance and temperature sensors (4 and 5) for a period of time determined by the manufacturer.

By means of the present invention, the taste and the foam performance of the coffee are improved. By using both the temperature sensor (5) and the distance sensor (4), the coffee is enabled to have an improved brewing and foam quality and is prevented from overflowing from the brewing pot (3). Moreover, by means of the location thereof, the temperature sensor (5) is prevented from being affected by the external environment, thus providing more accurate and stable detection. In addition, since by means of the sensor holder (6) on the ceiling of the brewing chamber (2), the temperature sensor (5) does not directly contact the liquid, cleaning problems such as bacteria accumulation on the temperature sensor (5) are eliminated. Since both the temperature sensor (5) and the distance sensor (4) are provided on the ceiling of the brewing chamber (2), incorrect reading of analog information is prevented.

## Claims

1. A coffee maker (1) **comprising** at least one brewing pot (3) wherein water, coffee and similar materials are put and which is placed into the brewing chamber (2); at least one heater (7) which is disposed on the base of the brewing chamber (2) and which heats the brewing pot (3); a control unit which enables the heater (7) to be turned on and off; and at least one distance sensor (4) which is disposed on the ceiling of the brewing chamber (2) and which measures the height of the mixture in the brewing pot (3), **characterized by** at least one temperature sensor (5) which is disposed on the ceiling of the brewing chamber (2) and which measures the temperature of the steam rising from the mixture in the brewing pot (3).

2. A coffee maker (1) as in Claim 1, **characterized by** the temperature sensor (5) which is an NTC sensor.

3. A coffee maker (1) as in Claim 1, **characterized by** the distance sensor (4) which is an infrared sensor.

4. A coffee maker (1) as in Claim 1 and 2, **characterized by** a sensor holder (6) which is provided on the ceiling of the brewing chamber (2), on the surface facing the inside of the brewing pot (3) and which has a slot (8) in the form of an inverted "V" and a base (9) whereon the temperature sensor (5) is fixed.

5. A coffee maker (1) as in Claim 4, **characterized by** the sensor holder (6) which is positioned close to the rear wall of the brewing chamber (2).

6. A coffee maker (1) as in Claim 1, **characterized by** a control unit which operates according to a control method which is determined by a function based on the temperature of the steam rising from the mixture in the brewing pot (3) and the level of the mixture in the brewing pot (3).

7. A coffee maker control method for a coffee maker (1) as in any one of the above claims, wherein the temperature of the brewed mixture is calculated as the solution of a function based on the temperature of the steam rising from the mixture in the brewing pot (3) and the height of the mixture in the brewing pot (3).

8. A coffee maker control method as in Claim 7, comprising the steps of calculating the temperature of the mixture in the brewing pot (3) from the temperature of the steam rising from the mixture in the brewing pot (3) and the height of the mixture in the brewing pot (3) and stopping the operation of the heater (7) by the control unit detecting that the mixture in the brewing pot (3) is brewed and rose as the temperature of the mixture in the brewing pot (3) predetermined by the manufacturer is reached.
